# FASCICULE DE BREVET EUROPEEN

(11) **EP 2 373 503 B1**
(45) Date de publication et mention de la délivrance du brevet: **31.10.2012**
(21) Numéro de dépôt: 09760910.1
(22) Date de dépôt: 02.12.2009
(51) Int. Cl.: B60C 11/12

(54) **BANDE DE ROULEMENT POURVUE D'INCISIONS.**
PROFIL MIT EINSCHNITTEN
TREAD WITH INCISIONS

(30) Priorité: 05.12.2008 FR 0858295
(43) Date de publication de la demande: 12.10.2011
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: TOULEMONT, Pierric, F-63000 Clermont-Ferrand (FR); FRAYSSE, Patrice, F-63112 Blanzat (FR)
(74) Mandataire: Diernaz, Christian
(86) Numéro de dépôt international: PCT/EP2009/066214
(87) Numéro de publication internationale: WO 2010/063751

(56) Documents cités:
- EP-A- 0 846 578
- EP-A- 1 170 153
- EP-A- 1 555 142
- JP-A- 11 151 915
- JP-A- 2002 316 517
- JP-A- 2005 219 638
- US-A1- 2002 166 613

## Description

L'invention concerne les bandes de roulement de pneu et plus particulièrement les incisions dont sont pourvues de telles bandes.

Afin d'atteindre une performance satisfaisante sur chaussée mouillée, il est connu de pourvoir une bande de roulement de pneu, ayant une surface de roulement destinée à être en contact avec la chaussée pendant le roulage, avec une pluralité de rainures d'orientation générale circonférentielle et transversale. Ces rainures présentent des largeurs supérieures à 2 mm pour des pneus de véhicules de tourisme et permettent un drainage de l'eau présente sur la chaussée par temps de pluie.

Ces rainures délimitent des éléments de matière caoutchoutique sous la forme de nervures et ou de blocs, ces éléments étant délimités sur la surface de roulement par des arêtes utiles pour assurer un bon contact avec la chaussée.

Pour augmenter le nombre d'arêtes au contact avec la chaussée, il est connu de pourvoir les éléments de la bande de roulement avec une pluralité d'incisions, c'est-à-dire avec de fines découpures qui tout en enlevant une quantité réduite voir nulle de matière créent des faces en vis-à-vis dont les intersections avec la surface de roulement forment des arêtes. Par définition ces incisions ont des largeurs moyennes inférieures à celles des rainures (c'est-à-dire inférieure à 2 mm et le plus souvent inférieure à 1 mm). Sous les efforts exercés par le sol sur la bande de roulement, les incisions ont tendance à se fermer jusqu'à ce que les faces en vis-à-vis viennent en contact.

Cette augmentation du nombre des incisions conduit dans certaines sollicitations à une diminution de la rigidité de la bande de roulement en réaction à des sollicitations exercées par la chaussée pendant le roulage.

Afin de limiter la diminution de rigidité liée à la présence de ces fines découpures, il est connu de réaliser des faces en vis-à-vis ayant des géométries en zigzag selon une ou plusieurs directions différentes afin de générer un engrènement d'une face avec la face opposée.

Le document JP-A-11-151915 décrit une incision dont le tracé dans l'épaisseur de la bande de roulement comprend une succession de tronçons perpendiculaires à la surface de roulement et de tronçons parallèles à la surface de roulement. Les tronçons perpendiculaires présentent des largeurs telles que le contact n'est pas possible entre les faces de l'incision sur ces tronçons. Sous un effort freineur, la rigidité des éléments de bande de roulement pourvus de telles incisions est diminuée par la présence des tronçons perpendiculaires à la surface de roulement puisqu'il n'y a pas de possibilité de contact entre les parois de ces tronçons. À l'opposé, les tronçons parallèles ont une largeur appropriée pour avoir en contact les faces de l'incision sur ces tronçons.

Ces espaces formés par les tronçons perpendiculaires jouent le rôle de réservoir pour évacuer de façon temporaire l'eau éventuellement présente sur la chaussée par temps de pluie et sur laquelle passe la bande de roulement.

Il est par ailleurs connu d'incliner selon une même orientation toutes les incisions d'une bande de roulement, ces incisions faisant un angle moyen d'inclinaison, voire des angles moyens d'inclinaison différents en valeur absolue selon la région considérée de la bande. Les incisions ont des largeurs faibles (c'est-à-dire inférieures à 2 mm) pour limiter le plus possible la diminution de rigidité, notamment en compression lorsque l'élément pourvu d'incision passe dans le contact avec la chaussée.

Dans une telle configuration, la charge appliquée au pneu conduit à un rapprochement des parois délimitant les incisions indépendamment de tout effort moteur ou freineur exercé par la chaussée sur la bande. Ce rapprochement peut se traduire par un contact entre les faces, ce qui augmente la rigidité des éléments de la bande de roulement.

L'objectif de l'invention est de former une bande de roulement dont les éléments en relief formant la sculpture destinée à venir en contact avec la chaussée présentent un fonctionnement approprié et différencié selon l'amplitude des efforts exercés par la chaussée sur ladite bande, que ces efforts soient moteurs ou freineurs.

Par effort freineur on entend un effort exercé par le sol sur la bande de roulement et orienté dans une direction opposée au sens du déplacement du pneu pourvu de ladite bande. Par effort moteur on entend un effort exercé par le sol sur la bande de roulement et orienté dans le sens du déplacement du pneu pourvu de ladite bande.

Il est proposé une bande de roulement pour pneu de véhicule tourisme, cette bande de roulement ayant radialement à l'extérieur une surface de roulement destinée à venir en contact avec la chaussée pendant le roulage et comprenant une pluralité d'éléments délimités par des découpures (ces éléments peuvent être des nervures ou des blocs). Au moins certains de ces éléments sont pourvus d'au moins une incision délimitée par deux faces en vis-à-vis, cette incision étant composée par une succession de tronçons minces et de tronçons épais disposés de manière alternée (un tronçon mince est suivi par un tronçon épais).

La bande selon l'invention est telle que chaque tronçon mince est incliné d'un angle moyen A au plus égal à 40 degrés, cet angle étant mesuré par rapport à une direction perpendiculaire à la surface de roulement de la bande et passant par les points de l'incision sur la surface de roulement de la bande, et chaque tronçon épais fait un angle moyen B compris entre 60 degrés et 120 degrés avec une direction perpendiculaire à la surface de roulement de la bande. En outre les tronçons minces ont une largeur moyenne inférieure à la largeur moyenne des tronçons épais, la largeur des tronçons minces étant telle qu'au passage dans le contact les parois délimitant lesdits tronçons minces sont en contact, la largeur des tronçons épais étant telle qu'au passage dans le contact les parois délimitant les tronçons épais ne sont pas en contact.

Pour que cette solution soit pleinement efficace, il est préférable que les tronçons minces soient fermés au moment du passage dans le contact avec la chaussée. Par fermé, on entend que les parois, délimitant un tronçon mince, sont en contact l'une sur l'autre quasiment sous la simple action de la charge supportée. Grâce à l'alternance de tronçons minces et de tronçons épais, ces derniers étant orientés de façon à être sensiblement parallèles à la surface de roulement (c'est-à-dire perpendiculaires à un plan passant par l'axe de rotation et les points de l'incision les plus à l'intérieur de la bande), on peut créer un effet de seuil. Par effet de seuil, on entend ici que jusqu'à un seuil d'amplitude d'effort tangentiel de la chaussée sur la bande de roulement, les parois en vis-à-vis de l'incision sont en contact sur les tronçons minces et restent fixes l'une par rapport à l'autre : tout se passe comme si la rigidité de l'élément était équivalente à celle du même élément sans incision. Au delà de ce seuil d'amplitude d'effort tangentiel, les parois en contact peuvent glisser l'une par rapport à l'autre à la fois parce que les forces de frottement sont vaincues et parce qu'il y a une possibilité de déplacement relatif liée à la présence de tronçons épais.

Préférentiellement les tronçons minces d'incision ont une largeur au plus égale à 0.4 mm et les tronçons épais d'incision ont une largeur plus grande que 0.4 mm, l'écart entre les largeurs des tronçons minces et des tronçons épais étant au moins égal à 0.2 mm.

Encore plus avantageusement, les tronçons minces d'incision ont une largeur au plus égale à 0.15 mm et les tronçons épais d'incision ont une largeur plus grande que 0.4 mm.

La présente incision se différencie des incisions de l'art antérieur puisque ces dernières ne présentaient pas de différentiation du comportement mécanique en fonction de l'amplitude de l'effort exercé par la chaussée sur la bande de roulement, que cet effort soit un effort moteur ou un effort freineur.

Grâce aux différences de largeurs entre les tronçons minces et les tronçons épais et à leurs orientations telles que spécifiées, on améliore la performance en manoeuvre de freinage de la bande. Il est ainsi possible d'adapter la rigidité de chaque élément pourvu d'incisions telles que décrites puisque à faibles efforts freineurs (efforts exercés par la chaussée sur la bande et tendant à s'opposer au déplacement) les forces de frottement des parois en contact sont suffisants pour maintenir bloquées lesdites parois, tandis qu'à plus forts efforts freineurs les forces de frottement des parois en contact l'une sur l'autre sont insuffisantes pour résister au glissement d'une paroi par rapport à l'autre. Dans ce dernier cas, il se produit un glissement qui est possible et toutefois limité en amplitude par la largeur des tronçons d'incision épais. Ce comportement différencié en fonction de l'amplitude de l'effort freineur est particulièrement intéressant puisque des faibles efforts freineurs ou moteurs sont notamment ceux qui interviennent dans les mécanismes d'usure tandis que les efforts freineurs plus élevés interviennent dans des roulages en conditions sur chaussée mouillée. Dans ce dernier cas (forts efforts freineurs), on cherche à ce que l'élément de matière puisse se déformer davantage pour améliorer la performance de freinage sur chaussée revêtue d'eau.

Dans une variante particulièrement intéressante de l'invention, il est proposé d'orienter les incisions de manière à ce que, lorsque la bande de roulement est soumise à un effort moyen moteur exercé par la chaussée, les tronçons minces des incisions aient tendance à rester fermement en contact, ce qui est avantageux pour réduire l'usure sous effort moteur.

Dans ce but, il est proposée une bande de roulement qui comporte un indicateur du sens de roulement imposé, cette bande de roulement ayant au moins une incision comprenant au moins un tronçon mince et un tronçon épais, les tronçons minces étant inclinés de façon que, vue en coupe dans un plan perpendiculaire à l'axe de rotation du pneu, la direction de l'indicateur de sens de roulement imposé soit identique au sens de rotation dont il faut faire tourner ledit tronçon d'incision, autour de son point le plus à l'intérieur de la bande, pour amener ce tronçon dans un plan contenant l'axe de rotation, chaque tronçon mince étant incliné d'un angle moyen A au moins égal à 20 degrés et au plus égal à 40 degrés avec une direction perpendiculaire à la surface de roulement.

Ainsi, on bénéficie d'un effet de seuil en fonction de l'amplitude de l'effort freineur exercée par le sol sur la bande et en outre l'orientation choisie en combinaison avec la direction d'avancement du pneu pourvu de ladite bande permet d'optimiser le fonctionnement de cette bande de roulement notamment sous effort moteur.

D'autres caractéristiques et avantages de l'invention ressortent de la description faite ci-après en référence aux dessins annexés qui montrent, à titre d'exemples non limitatifs, des formes de réalisation de l'objet de l'invention.

La figure 1 montre une vue en plan d'une bande de roulement comprenant des éléments pourvus d'incisions selon l'invention ;

La figure 2 montre une coupe en coupe selon la ligne II-II prise sur un élément de la figure 1 ;

Les figures 3 à 6 montrent des variantes d'incisions selon l'invention.

Toutes les figures accompagnant la présente description sont données à titre indicatif et les dimensions qu'elles soient absolues ou relatives ne sont qu'indicatives ; par ailleurs, un même élément de structure sera repéré par la même référence numérique sur des figures montrant des variantes différentes de l'invention.

Une bande de roulement pour pneu est limitée par des surfaces externes dont une a pour vocation à être en contact avec une structure de pneu et une autre est destinée à être en contact avec la chaussée en cours d'utilisation ; la direction sensiblement perpendiculaire à ces deux surfaces est dite direction radiale sur le pneu. Suivant cette direction on mesure l'épaisseur de la bande.

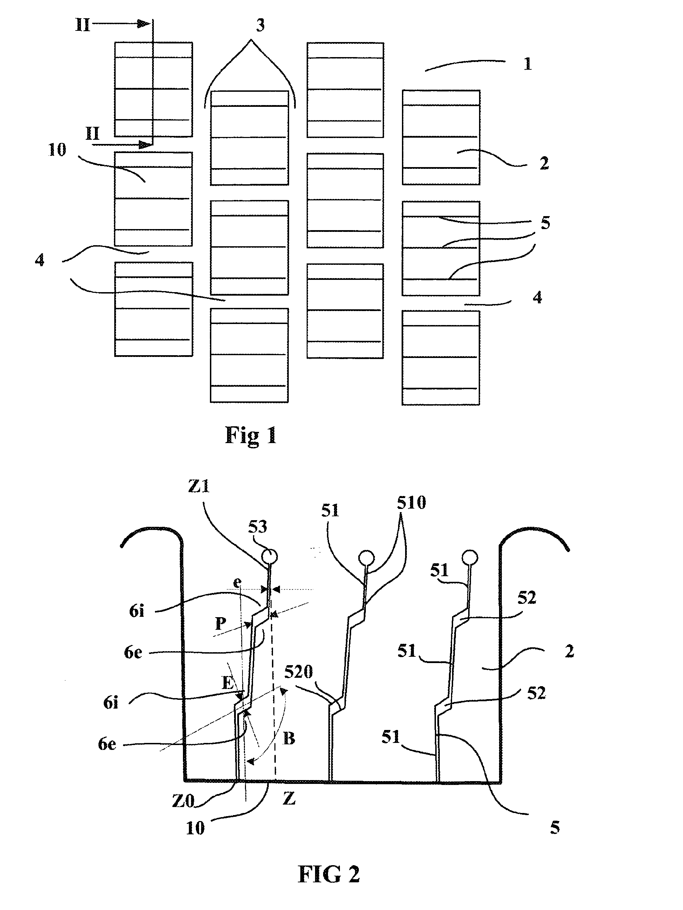

La figure 1 montre une vue en plan d'une partie d'une bande de roulement 1 comprenant une pluralité d'éléments de relief (blocs) 2 délimités par des rainures d'orientation longitudinale 3 (c'est-à-dire circonférentielle sur le pneu pourvu de ladite bande) et des rainures d'orientation transversale 4. En outre, ces éléments de relief 2 sont pourvus chacun de plusieurs incisions 5 selon l'invention, ces incisions coupant la surface de roulement 10 créent deux arêtes utiles pour améliorer la performance de contact et d'adhérence ("grip").

Sur la figure 2, on montre une coupe selon la ligne II-II réalisée sur la bande représentée à la figure 1. Sur cette figure 2, on voit les traces dans le plan de coupe des incisions 5. Chaque incision comprend trois tronçons minces 51 et deux tronçons épais 52, ces tronçons minces et épais étant disposés en alternance en allant de la surface de roulement 10 vers l'intérieur de la bande. Le tronçon débouchant sur la surface de roulement à l'état neuf de la bande est un tronçon mince 51 faisant un angle nul avec une perpendiculaire à la surface de roulement passant par le point **Z0** d'intersection de l'incision 5 avec la surface de roulement 10 dans le plan de la figure 2. Ce premier tronçon mince débouchant sur la surface de roulement est prolongé vers l'intérieur de la bande par un tronçon épais 52 faisant un angle **B** égal à 100 degrés avec la direction perpendiculaire à la surface de roulement telle que précédemment définie. Dans le cas présent, les tronçons épais font un angle de 10 degrés avec un plan parallèle à la surface de roulement de manière à prolonger un tronçon mince vers l'intérieur de la bande. Dans l'exemple décrit avec la figure 2, les tronçons minces ont tous la même orientation, de même les tronçons épais ont tous la même orientation B. Par convention, un angle B égal à 90 degrés correspond à une direction parallèle à face de contact.

Les tronçons minces 51 sont délimités par des parois 510 en vis-à-vis et ont une largeur e inférieure à la largeur E des tronçons épais 52 ; la largeur **e** des tronçons minces est telle qu'au passage dans le contact les parois 510 délimitant lesdits tronçons minces sont quasiment instantanément en contact (ces mêmes parois 510 peuvent être en contact avant même de passer dans le contact dans le cas notamment d'incision de largeur nulle). Dans le cas présent l'épaisseur **e,** mesurée perpendiculairement aux parois délimitant l'incision sur le tronçon mince considéré, vaut 0.3 mm. La largeur **E** des tronçons épais 52, mesurée perpendiculairement aux parois délimitant l'incision sur le tronçon épais considéré, est supérieure à celle des tronçons minces 51 et telle que sous l'action seule de la charge supportée, les parois 520 délimitant les tronçons épais 52 ne sont pas en contact. La largeur **E** vaut dans le cas présent 0.8 mm.

La longueur **P** des tronçons épais est un paramètre de réglage à la disposition de la personne du métier pour régler l'encombrement de l'incision et également pour assurer un bon blocage lors de certaines manoeuvres. Le point **Z1** le plus à l'intérieur de l'incision 5 est ici formé par un élargissement 53 utile pour réduire les concentrations de contrainte. Les tronçons épais génèrent des coins 6i et 6e de matière qui peuvent venir en contact lors d'un déplacement relatif des faces délimitant les tronçons minces. Les coins de matière 6e sont situés du côté de la face de contact par rapport aux coins 6i. Ce point Z1 a pour projection sur la face de contact de l'élément un point Z dans le plan de coupe de la figure 2 ; dans le cas où le sol exerce sur la face de contact un effort F tangent à cette face et orienté selon la direction allant du point Z au point Z0, et après glissement des faces en vis-à-vis des tronçons minces, les coins 6e viennent s'appuyer sur les coins 6i bloquant ainsi la déformation de l'élément.

Lors d'une manoeuvre produisant un effort tangentiel de la chaussée sur la bande de roulement, et en fonction de l'amplitude de cet effort, on obtient grâce à cette incision un fonctionnement mécanique variable selon que l'effort F est inférieur à un seuil prédéterminé d'effort Fs ou supérieur à ce seuil Fs. En effet, pour des efforts compris entre zéro et la valeur de seuil Fs, les forces de frottement résultant des contacts entre les parois 510 des tronçons minces 51 sont suffisantes pour s'opposer au déplacement relatif desdites parois. Pour des efforts F supérieurs à la valeur de seuil, les parois des tronçons minces en contact vont glisser l'une par rapport à l'autre favorisant ainsi une plus grande déformation des éléments de la bande de roulement et par là un meilleur contact avec la chaussée. Ce glissement se fait jusqu'à ce que les parois des tronçons épais viennent en contact les unes sur les autres assurant dès lors un blocage des mouvements relatifs et donc de la déformation de la bande. Ainsi il est possible de gérer le fonctionnement mécanique de chaque élément de relief de la bande en réglant a priori la valeur du seuil Fs en fonction de l'amplitude de l'effort considéré (moteur ou freineur) qui s'exerce sur une bande de roulement notamment en considérant le véhicule et les conditions de roulage.

Selon que l'on est dans une configuration d'effort moteur ou dans une configuration d'effort freineur, on peut obtenir des seuils d'effort de valeurs différentes : sous effort moteur le seuil au-delà duquel il y a glissement des parois opposées des parties minces peut être plus grand que le seuil sous effort freineur pour avoir glissement.

Comme on l'a constaté, chacun de ces seuils dépend de la limite à partir de laquelle il se produit un glissement des parois des tronçons minces les unes sur les autres. Cette limite et donc ces seuils d'effort Fs peuvent être ajustés grâce à différents facteurs à la disposition de la personne du métier et notamment :

- les dimensions des parois en contact ;

- les coefficients de frottement de contact des parois entre elles ;

- l'épaisseur e de l'incision dans le tronçon mince (plus cette épaisseur est réduite et plus le seuil Fs est décalé vers des valeurs plus grandes).

Au delà du seuil Fs, les parois 510 des tronçons minces peuvent donc glisser les unes sur les autres ; la limite de l'amplitude de ce glissement est sensiblement égale à la largeur E des tronçons épais 52 ; cette largeur **E** est mesurée parallèlement à la direction des tronçons minces (dans le cas présent dans une direction perpendiculaire à la surface de roulement). Cette largeur **E** est également un paramètre de réglage à la disposition de la personne du métier pour limiter l'amplitude du glissement.

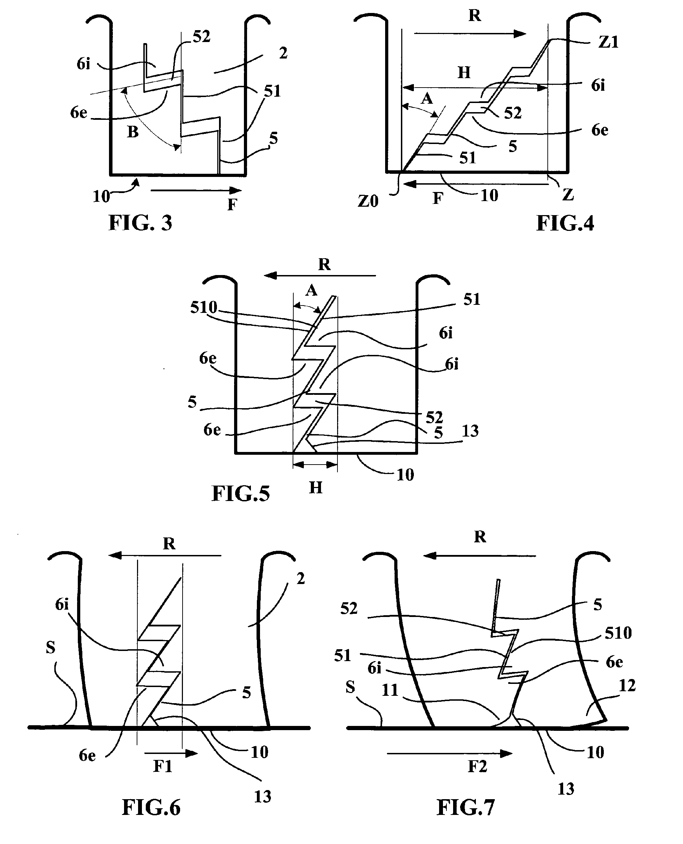

La variante d'incision 5, montrée en coupe à la figure 3, comprend trois tronçons minces 51 de largeur égale à 0.2 mm orientés perpendiculairement à la surface de roulement et deux tronçons épais 52 disposés en alternance avec les tronçons minces. Dans cette variante, les tronçons épais ont une largeur égale à 1 mm et sont orientés de manière à faire un angle moyen **B** de 80 degrés avec une direction perpendiculaire à la surface de roulement : dans le cas présent, chaque tronçon épais prolonge un tronçon mince et est orienté vers la surface de roulement 10. On voit la formation de coins externe 6e et interne 6i de matière, chaque coin externe 6e étant localisé à l'extérieur (c'est-à-dire vers la face de contact) par rapport à un coin interne 6i, de manière à ce que chaque coin externe 6e puisse venir en contact avec un coin interne 6i lors d'un glissement des faces des tronçons minces. Cette mise en contact est possible pour un sens d'effort **F** indiqué par une flèche sur la figure 3 du sol sur la face de contact de l'élément.

Dans la variante montrée avec la figure 4, l'incision 5 comprend des parties minces 51 inclinées d'un angle **A** par rapport à une direction perpendiculaire à la surface de roulement. La direction indiquée par la flèche correspond à la direction d'avancement **R** (de la droite à la gauche de la figure dans le cas présent). L'inclinaison de chaque tronçon mince est telle que la direction joignant le point **Z** obtenu comme la projection sur la surface de roulement du point **Z1** le plus à l'intérieur de la bande et le point le plus à l'extérieur **Z0** sur la surface de roulement est opposée à la direction d'avancement **R.** Dans cette variante, les tronçons minces 51 sont inclinés d'un angle **A** égal à 30 degrés avec une direction perpendiculaire à la surface de roulement 10. Les tronçons épais 52 sont sensiblement parallèles à la surface de roulement. L'écart d'épaisseur entre les tronçons épais 52 et les tronçons minces est ici supérieur à 0.3 mm. Dans cette variante, lors d'une phase de freinage, les tronçons minces sont fermés et au delà d'un seuil d'effort freineur indiqué par la flèche **F,** les faces en vis-à-vis de ces tronçons vont pouvoir glisser les unes sur les autres jusqu'à ce que les coins externe 6e viennent en contact avec les coins internes 6i (les coins externes 6e étant situés vers la face de contact de l'élément par rapport aux coins internes 6i).

La variante montrée avec la figure 5 est sensiblement équivalente à celle montrée avec la figure 4, la seule différence résidant dans la disposition des différents tronçons d'incision les uns par rapport aux autres. En effet, dans cette variante de la figure 5, la longueur **H** occupée par l'incision 5 dans la bande correspond à la longueur de la projection perpendiculaire de chacun des différents tronçons minces et épais sur la surface de roulement 10, tandis que dans la variante de la figure 4 cette même longueur **H** était égale à la somme desdites projections, c'est-à-dire à la distance séparant les points **Z** et **Z1.** Dans cette variante montrée avec la figure 5, les tronçons minces sont inclinés d'un angle **A** égal à 30 degrés avec une direction perpendiculaire à la surface de roulement et les tronçons épais sont parallèles à la surface de roulement. Dans cette variante de la figure 5, il est formé des coins externes 6e et des coins internes 6i, chacun desdits coins étant formés par une face d'un tronçon mince et une face d'un tronçon épais. Un coin externe 6e est destiné à coopérer par contact avec un coin interne 6i sur une face opposée de l'incision 5.

En outre, la variante montrée avec cette figure 5 comprend un chanfrein 13 de 1 mm par 1 mm de côté (c'est-à-dire faisant un angle égal à 45 degrés avec une perpendiculaire à la surface de roulement) sur l'arête de fuite formée par l'incision sur la face de contact de façon à réduire au moins dans les premiers kilomètres de roulage les usures localisées sur l'arête de fuite de l'incision telle que définie par la présente invention. Par définition une incision coupe la surface de roulement suivant une arête d'attaque (première à rentrer dans le contact sur un même élément) et une arête de fuite (dernière à sortir du contact).

Les figures 6 et 7 montrent le fonctionnement de la lamelle montrée avec la figure 5 lors de deux manoeuvres de freinage (amplitudes d'effort différentes). Le pneu roule sur un sol S.

Sous l'action de la charge portée par le pneu, on obtient une fermeture de l'incision par la mise en contact des parois 510 des tronçons minces 51. Dans une première manoeuvre de freinage, représentée avec la figure 6, il s'agit de ne plus accélérer le véhicule par un relevé de pied de la pédale d'accélérateur. Dans cette manoeuvre, il apparaît un effort global freineur **F1** de faible amplitude qui ne modifie quasiment pas les conditions de fermeture de l'incision. Dans cette manoeuvre de freinage du véhicule se déplaçant de la droite vers la gauche de la figure (sens de la flèche **R),** la force exercée **F1** par la chaussée sur le pneu a tendance à s'opposer au déplacement : cette force **F1** est en conséquence dirigée de la gauche vers la droite de la figure. Dans cette manoeuvre, tout se passe comme si le bloc avait une rigidité voisine de celle d'un bloc sans incision. Ceci est favorable pour réduire l'usure de la bande de roulement. Dans cette première manoeuvre de freinage, les coins internes et externes ne sont pas en contact et ne peuvent venir en contact.

Dans une deuxième manoeuvre de freinage - montrée avec la figure 7 - faisant suite à la première manoeuvre de freinage, le conducteur utilise la pédale de frein pour effectivement freiner son véhicule. Dans cette manoeuvre de freinage du véhicule se déplaçant de la droite vers la gauche de la figure (sens de la flèche **R)**, la force exercée **F2** par la chaussée sur le pneu a tendance à s'opposer au déplacement : cette force **F2** est en conséquence dirigée de la gauche vers la droite de la figure. Cette force **F2** a tendance à vouloir redresser les tronçons minces inclinés de l'incision, c'est-à-dire à les faire tourner pour les rapprocher de la direction perpendiculaire à la surface de roulement 10. Quand cette force **F2** devient supérieure au seuil **Fs** d'effort provoquant un glissement des parois 510 des tronçons minces 51, il y a glissement et déplacement relatif des parois 510 des tronçons minces 51 les unes par rapport aux autres, ce qui rend possible une plus grande déformation par basculement dudit élément afin d'assurer une bonne performance d'adhérence sur chaussée notamment sur chaussée mouillée.

On voit que dans cette deuxième manoeuvre de freinage les coins externes 6e se sont rapprochés des coins internes 6i. Si l'effort freineur augmente, ces coins externes et internes viennent en contact pour limiter alors la déformation de l'élément 2 de bande de roulement.

Dans cette manoeuvre de freinage imposant un effort de freinage supérieur au seuil Fs, on constate que grâce aux glissements des parois des tronçons minces de l'incision 5, on obtient une sorte de soulèvement local des parties d'attaque 11, 12 du bloc 10. Une desdites parties d'attaque correspond à l'arête d'attaque du bloc et l'autre correspond à l'une des arêtes formées par l'incision 5 dans le bloc. Grâce à ces soulèvements locaux, la pression moyenne de contact du bloc avec la chaussée augmente, ce qui a pour conséquence une amélioration de l'adhérence sur sol revêtu d'eau.

Sur sol sec, les efforts de freinage sont en général plus importants en amplitude et conduisent à une mise en contact des parois des tronçons épais : grâce à ce contact il est possible d'obtenir même sur sol sec une bonne performance en adhérence.

A l'inverse de l'effort freineur, l'application d'un effort moteur tend à accentuer la fermeture des incisions sur les tronçons minces par une augmentation sensible de la pression de contact qu'exerce une paroi sur la paroi en vis-à-vis sur ces mêmes tronçons minces. Ceci permet d'éviter le glissement relatif entre les parois des incisions minces et en conséquence confère à la sculpture une rigidité élevée sous effort moteur (c'est-à-dire une sculpture proche d'une sculpture sans incision), gage d'une bonne performance en usure.

L'invention n'est pas limitée aux exemples décrits et représentés et diverses modifications peuvent y être apportées sans sortir de son cadre. L'incision selon l'invention qui a été montrée dans des blocs peut être mise en oeuvre dans des nervures. Il est possible notamment de combiner des tronçons minces d'orientations différentes dans une même incision. Il est également possible de combiner dans une même incision des tronçons épais ayant des inclinaisons différentes, c'est-à-dire que chaque tronçon a une inclinaison qui lui est propre. Il est également possible de combiner des tronçons minces et/ou épais de profondeurs différentes et de largeur différentes, Par exemple, on peut employer une incision selon l'invention dont les tronçons épais ont chacun une épaisseur propre, le dernier tronçon épais ayant l'épaisseur la plus grande,

## Revendications

1. Bande de roulement (1) pour pneu tourisme, cette bande de roulement ayant radialement à l'extérieur une surface de roulement (10) destinée à venir en contact avec la chaussée pendant le roulage, cette bande comprenant une pluralité d'éléments (2) délimités par des découpures, au moins certains de ces éléments étant pourvus d'au moins une incision (5) délimitée par deux faces en vis-à-vis, cette incision étant composée par une succession de tronçons minces (51) et de tronçons épais (52) disposés de manière alternée, cette bande de roulement étant **caractérisée en ce que** chaque tronçon mince (51) est incliné d'un angle moyen A au plus égal à 40 degrés, cet angle étant mesuré par rapport à une direction perpendiculaire à la surface de roulement de la bande et passant par les points de l'incision sur la surface de roulement de la bande, chaque tronçon épais (52) fait un angle moyen **B** compris entre 60 degrés et 120 degrés avec une direction perpendiculaire à la surface de roulement de la bande, et **en ce que** les tronçons minces (51) ont une largeur **e** inférieure à la largeur **E** des tronçons épais (52), la largeur des tronçons minces étant telle qu'au passage dans le contact les parois délimitant lesdits tronçons minces sont en contact, et la largeur des tronçons épais étant telle qu'au passage dans le contact les parois délimitant les tronçons épais ne sont pas en contact.

2. Bande de roulement selon la revendication 1 **caractérisée en ce que** les tronçons minces (51) d'incision ont une largeur au plus égale à 0.4 mm et **en ce que** les tronçons épais (52) d'incision ont une largeur plus grande que 0.4 mm, l'écart entre les largeurs des tronçons minces (51) et des tronçons épais (52) étant au moins égal à 0.2 mm.

3. Bande de roulement selon la revendication 2 **caractérisée en ce que** les tronçons minces (51) d'incision ont une largeur au plus égale à 0.15 mm et **en ce que** les tronçons épais (52) d'incision ont une largeur plus grande que 0.4 mm.

4. Bande de roulement selon l'une des revendications 1 à 3 **caractérisée en ce qu'**elle a un sens de roulement imposé et **en ce qu'**elle comporte un indicateur de ce sens de roulement, et **en ce qu'**au moins une incision comprend au moins un tronçon mince (51) et un tronçon épais (52), les tronçons minces (51) étant inclinés de façon que, vue en coupe dans un plan perpendiculaire à l'axe de rotation du pneu, la direction de l'indicateur de sens de roulement imposé soit identique au sens de rotation dont il faut faire tourner ledit tronçon mince (51) d'incision autour de son point le plus à l'intérieur de la bande pour amener ce tronçon mince (51) dans un plan contenant l'axe de rotation, les tronçons minces (51) étant inclinés d'un angle **A** au moins égal à 20 degrés et au plus égal à 40 degrés avec une direction perpendiculaire à la surface de roulement 10.

5. Bande de roulement selon l'une des revendications 1 à 4 **caractérisée en ce que**, chaque incision (5) coupant la surface de roulement (10) pour former une arête d'attaque et une arête de fuite, l'arête de fuite comprend un chanfrein (13).

## Claims

1. Tread (1) for a passenger-vehicle tyre, this tread having radially on the outside a running surface (10) designed to come into contact with the road surface when running, this tread comprising a plurality of elements (2) delimited by indentations, at least certain of these elements being provided with at least one incision (5) delimited by two opposite faces, this incision consisting of a succession of thin sections (51) and of thick sections (52) placed in an alternating manner, this tread being **characterized in that** each thin section (51) is inclined at an average angle **A** equal to no more than 40 degrees, this angle being measured relative to a direction perpendicular to the running surface of the tread and passing through the points of the incision on the running surface of the tread, each thick section (52) makes an average angle **B** of between 60 degrees and 120 degrees with a direction perpendicular to the running surface of the tread, and **in that** the thin sections (51) have a width **e** less than the width **E** of the thick sections (52), the width of the thin sections being such that, when they go through the contact patch, the walls delimiting the said thin sections are in contact, and the width of the thick sections being such that, when they go through the contact patch, the walls delimiting the thick sections are not in contact.

2. Tread according to Claim 1, **characterized in that** the thin sections (51) of incision have a width equal to no more than 0.4 mm and **in that** the thick sections (52) of incision have a width of more than 0.4 mm, the difference between the widths of the thin sections (51) and of the thick sections (52) being at least equal to 0.2 mm.

3. Tread according to Claim 2, **characterized in that** the thin sections (51) of incision have a width equal to no more than 0.15 mm and **in that** the thick sections (52) of incision have a width of more than 0.4 mm.

4. Tread according to one of Claims 1 to 3, **characterized in that** it has an imposed running direction and **in that** it comprises an indicator of this running direction, and **in that** at least one incision comprises at least one thin section (51) and one thick section (52), the thin sections (51) being inclined so that, seen in section in a plane perpendicular to the rotation axis of the tyre, the direction of the indicator of the imposed running direction is identical to the rotation direction in which the said thin section (51) of incision must be made to rotate about its innermost point of the tread in order to bring this thin section (51) into a plane containing the rotation axis, the thin sections (51) being inclined at an angle **A** at least equal to 20 degrees and equal to no more than 40 degrees with a direction perpendicular to the running surface (10).

5. Tread according to one of Claims 1 to 4, **characterized in that** each incision (5) cutting the running surface (10) in order to form a leading edge and a trailing edge, the trailing edge comprises a bevel (13).

## Patentansprüche

1. Laufstreifen (1) für einen Autoreifen, wobei dieser Laufstreifen radial außen eine Lauffläche (10) hat, die dazu bestimmt ist, während des Rollens mit der Fahrbahn in Kontakt zu kommen, wobei dieser Streifen eine Vielzahl von Elementen (2) enthält, die durch Ausschnitte begrenzt werden, wobei mindestens bestimmte dieser Elemente mit mindestens einem Einschnitt (5) versehen sind, der von zwei einander gegenüberliegenden Seiten begrenzt wird, wobei dieser Einschnitt aus einer Folge von abwechselnd angeordneten dünnen Abschnitten (51) und dicken Abschnitten (52) besteht, wobei dieser Laufstreifen **dadurch gekennzeichnet ist, dass** jeder dünne Abschnitt (51) um einen mittleren Winkel A höchstens gleich 40 Grad geneigt ist, wobei dieser Winkel bezüglich einer Richtung lotrecht zur Lauffläche des Streifens gemessen wird und durch die Punkte des Einschnitts an der Lauffläche des Streifens verläuft, wobei jeder dicke Abschnitt (52) einen mittleren Winkel B zwischen 60 Grad und 120 Grad mit einer Richtung lotrecht zur Lauffläche des Streifen bildet, und dass die dünnen Abschnitte (51) eine Breite e geringer als die Breite E der dicken Abschnitte (52) haben, wobei die Breite der dünnen Abschnitte so ist, dass beim Übergang in den Kontakt die die dünnen Abschnitte begrenzenden Wände in Kontakt sind, und die Breite der dicken Abschnitte so ist, dass beim Übergang in den Kontakt die die dicken Abschnitte begrenzenden Wände nicht in Kontakt sind.

2. Laufstreifen nach Anspruch 1, **dadurch gekennzeichnet, dass** die dünnen Einschnittsabschnitte (51) eine Breite höchsten gleich 0,4 mm haben, und dass die dicken Einschnittsabschnitte (52) eine Breite größer als 0,4 mm haben, wobei die Abweichung zwischen den Breiten der dünnen Abschnitte (51) und der dicken Abschnitte (52) mindestens gleich 0,2 mm ist.

3. Laufstreifen nach Anspruch 2, **dadurch gekennzeichnet, dass** die dünnen Einschnittsabschnitte (51) eine Breite höchstens gleich 0,15 mm haben, und dass die dicken Einschnittsabschnitte (52) eine Dicke größer als 0,4 mm haben.

4. Laufstreifen nach einem der Ansprüche 1 bis 3, **dadurch gekennzeichnet, dass** er eine vorgegebene Rollrichtung hat, und dass er einen Anzeiger dieser Rollrichtung aufweist, und dass mindestens ein Einschnitt mindestens einen dünnen Abschnitt (51) und einen dicken Abschnitt (52) enthält, wobei die dünnen Abschnitte (51) so geneigt sind, dass, im Schnitt in einer Ebene lotrecht zur Drehachse des Reifens gesehen, die Richtung des Anzeigers der vorgegebenen Rollrichtung gleich der Drehrichtung ist, um die der dünne Einschnittsabschnitt (51) um seinen am weitesten innerhalb des Streifens befindlichen Punkt gedreht werden muss, um diesen dünnen Abschnitt (51) in eine die Drehachse enthaltende Ebene zu bringen, wobei die dünnen Abschnitte (51) um einen Winkel A mindestens gleich 20 Grad und höchstens gleich 40 Grad zu einer Richtung lotrecht zur Lauffläche 10 geneigt sind.

5. Laufstreifen nach einem der Ansprüche 1 bis 4, **dadurch gekennzeichnet, dass**, wenn jeder Einschnitt (5) die Lauffläche (10) schneidet, um eine Vorderkante und eine Hinterkante zu formen, die Hinterkante eine Abschrägung (13) aufweist.
